## Europäisches Patentamt
## European Patent Office
## Office européen des brevets

(11) Publication number: **0 094 458**
**A1**

# EUROPEAN PATENT APPLICATION

(21) Application number: **82302500.2**

(22) Date of filing: **17.05.82**

(51) Int. Cl.³: **G 05 D 23/19**
**C 21 D 11/00, H 05 B 1/02**

(43) Date of publication of application:
**23.11.83 Bulletin 83/47**

(84) Designated Contracting States:
**AT BE CH DE FR GB IT LI LU NL SE**

(71) Applicant: **Tejfalussy, András**
**Lajos utca 115**
**H-1036 Budapest(HU)**

(72) Inventor: **Tejfalussy, András**
**Lajos utca 115**
**H-1036 Budapest(HU)**

(74) Representative: **Gold, Tibor Zoltán et al,**
**T.Z.GOLD & COMPANY 9, Staple Inn**
**London WC1V 7QH(GB)**

(54) **Temperature distribution regulating sample holder-adapter for forming conditions for gradient heat treatment in heat treatment ovens or furnaces.**

(57) The invention concerns an adapter unit for use in commercially available heat treatment furnaces to enable them to be used in gradient or differential heat treatment processes.

The adapter unit includes an oven or furnace (21) containing sample holder (1) mechanically coupled via a pusher/puller rod (5) to an actuating device (4) controlled by an electrical input that receives a control voltage signal ($U_{vez}$) and a signal from a regulator (9) that, in turn, receives a signal from at least one temperature sensor (3). Other temperature sensors (3) are connected to measuring/recording instruments (10,11) and to a regulator (7) that controls heating elements (8) disposed about the sample holder (1). The elements (8) are effective to establish a hot/cold boundary (6) in the furnace (21) in relation to which the sample holder (1) may be displaced along a given axis (x) by means of the actuating mechanism (4, 5).

Fig.1

Temperature distribution regulating sample holder-adapter
for forming conditions for gradient heat treatment in
heat treatment ovens or furnaces
------------------------------------------------------------

The invention concerns temperature distribution
regulating sample holder-adapter for forming conditions
for gradient heat treatment in heat treatment furnaces.

From Hungarian Patent Specification No. 163,839
entitled 'Process and apparatus for optimising metallurgical technologies' the following optimisation process is
known:

In a sample taken from a material for which the
optimum heat treatment temperature is sought to be
determined and/or in a medium which is in a mutually
affecting relationship with the sample, there is established a temperature distribution or distributions of
constant or changing gradient, then by examining the properties of the material along the gradient the most
appropriate temperature distribution is determined, then
the experimental heat treatment is repeated in the thus
selected range, with the aid of reduced temperature
gradient or gradients and by one or more such steps the
optimum temperature is determined from the material the
quantity of which is increased to the required size, since
the space corresponding to the optimum increases as the
gradient or gradients in the material samples are reduced.

From the point of view of the process the above-
mentioned invention may be utilised over many fields but
only a few special apparatuses are described which are employable only within narrow areas and which have to be purpose-built. One heat treatment apparatus essentially consists in the direct Joule heating of the sample body while in the other described solution a special double arrangement of the heating body is required in which one produces an inhomogeneous temperature along a given direction while the other produces a homogeneous temperature, over the same distance. Such apparatus is not at present commercially available and one cannot anticipate such availability in the near future because of the special heating and regulation that are required. For these reasons, the process according to the said patent, although very versatile, can scarcely be utilised at all in practice in the field of heat treatment, since the traditional heat treatment apparatuses are of totally different construction. In principle one might utilise the so-called two-zoned ovens for gradient heat treatment purposes but such ovens of small size are not normally built because of the higher investment costs, and on the other hand in such ovens a relatively large difference between the temperatures of the zones, as required for gradient heat treatment, would exert an excessive load on the walls and on the regulating instruments, or in other words in the majority of cases the required magnitudes for the gradients could not even be produced; yet in beginning the search for the optimal heat treatment temperature such large gradients are unconditionally required.

The aim of the invention is to provide apparatus which may be produced and used simply and economically and which makes it possible for the optimisation process described in Hungarian Patent Specification No. 163,839 to be used in any technology of material production or material treatment connected with heat treatment, by employing conventional heat treatment devices which were not made or intended for gradient heat treatment.

The invention is based on the discovery that a sample holder of suitable thermal conductivity and a temperature sensor fixed to the sample holder may be utilised together with an adjustment means which enable the position of the sample holder to be controllable and adjustable relative to the edge of a given heat treatment space or chamber in accordance with the desired temperature gradient and thus such a construction could be used as an adapter for conventional heat treatment devices to render them suitable for controlling the heat or temperature distribution gradient along the sample holder according to a given mathematical function. To achieve this aim, that is to say to ensure that the sample holder adapter for regulating the temperature distribution according to the invention should control the temperature distribution in the sample holder according to the desired or prescribed gradient, the adapter includes a sample holder body made from a heat conducting material to which temperature sensor(s) is or are connected at the appropriate locations for the limiting or extreme values of the temperatures along the gradient, the temperature sensor(s) is connected to the control means or circuitry that controls the temperature in the heat treatment oven on its hot side while on its cold side the control means for controlling the position of the sample holder are connected in given cases recording and/or measuring device(s) is or are connected to the sensors for recording or measuring the temperature distribution.

In one possible preferred embodiment of the heat distribution controlling sample holder adapter a heat sensor is provided which can be displaced along the temperature gradient and which is connected with one or more regulating and temperature distribution measuring device or devices.

In another preferred embodiment of the heat distribution controlling adapter the heat sensor that can be displaced along the temperature gradient is displaced by an automatic mechanism between the high temperature point and the low temperature point in a reciprocating manner and a signal emitter (transducer) is included in the automatic mechanism for giving signals in accordance with the position of the temperature sensor.

In any of these preferred embodiments and in given cases the part of the sample holder which actually receives or accommodates the samples is disposed in the interior of a closable retort or reaction vessel which may in given cases be connected to a vacuum system or to a gas flushing system.

Naturally, the adapter may be used with any other kind of gradient heat treatment and its construction may be realised in the most varied dimensions and for the most varied temperature ranges from materials which may be known per se and which are selected and dimensioned for given operational temperatures and loads.

A preferred embodiment of the heat distribution controlling sample holding adapter according to the invention can be realised such that the temperature sensor is connected along the distance between the hot point and the cold point to one or more further regulators associated with one or more further heat treatment zones, e.g. for the purposes of linearisation of the temperature distribution, in special cases.

In an advantageous preferred embodiment the temperature sensors of the temperature distribution controlling sample holding adapter according to the invention are connected to controllers which process the signal from the temperature sensor and the hot point temperature is set by controlling the heating of one or more zones of the oven while the cold point temperature is set by a suitable positioning of the sample holder along the temperature gradient.

The invention is described in greater detail and by way of example with reference to the accompanying drawings and Examples 1 to 6. In the drawings:-

Figure 1 shows schematically a sample holder adapter for regulating the temperature distribution in a single zone traditional heat treatment device and for regulating the heating for the heat treatment chamber of the device;

Figure 2 illustrates the method of measuring the temperature by means of a displaceable temperator sensor in the sample holder that regulates temperature distribution, according to the invention;

Figure 3 illustrates an advantageous constructional embodiment in block form for the operation of the displaceable temperature sensor;

Figure 4 shows an alternative embodiment of the construction of the temperature distribution regulating sample holding adapter, utilising a retort or reaction chamber and which is displaceable;

Figure 5 is a block diagram utilising a micro-processor based automatic system for actuating the temperature sensor and passing its signal between the various controllers and measuring instruments;

Figure 6 is a further advantageous embodiment of the temperature distribution controlling sample holding adapter for use with a multi-zone heating heat treatment chamber and its controlling circuits, and

Figure 7 is a variant of the temperature distribution controlling sample holding adapter provided with a control mode changing switch with the aid of which temperature distributions of small or large gradients can be readily adjusted by an automatic control system.

Example 1

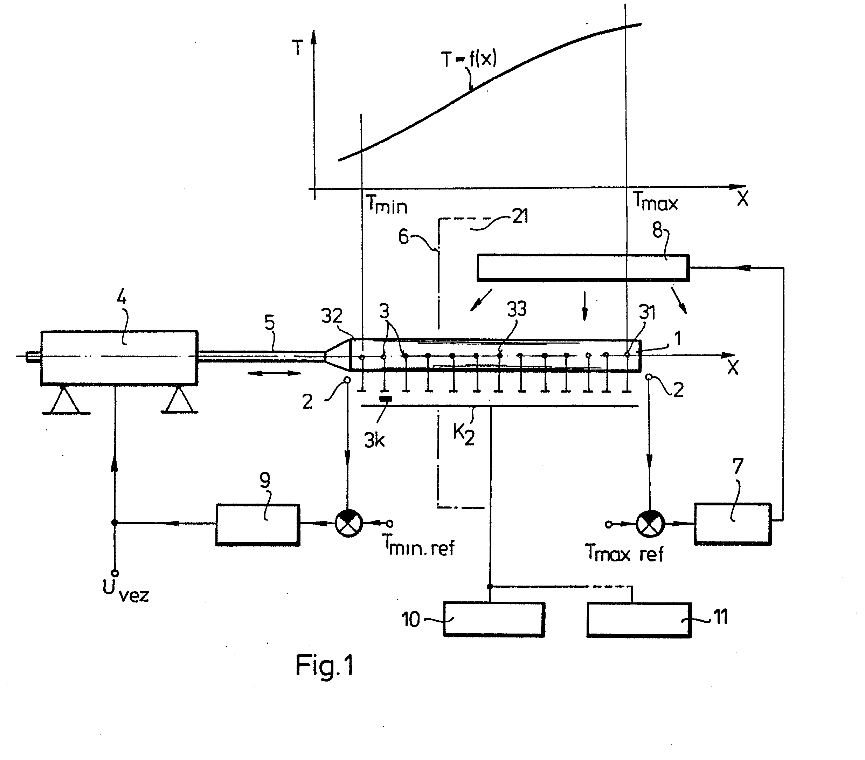

One preferred embodiment illustrated in Figure 1 is a construction which may be realised extremely simply. The sample holder 1 is in an oven zone 21 and can be displaced in it with the aid of a pushing or pulling element 5, as desired. By means of the pusher/puller element 5 the sample holder 1 may be moved to a greater or lesser extent inwardly or outwardly or positioned in relation to the boundary 6 between the cold and the hot parts of the oven zone 21. One or more temperature sensors 3 are connected to the sample holder 1 or to the samples on the sample holder. The temperature sensors 3 are not disposed directly in the samples but rather they are disposed in their immediate vicinity and in given cases in the sample holder 1, while the temperature sensor 3 at a warmer point along the direction $x$ is connected to a temperature sensor 7 which controls the operation of the heating elements 8 of the oven zone 21. A temperature sensor 3 disposed at the colder point along the direction $x$ is connected to a regulator 9 that controls the position of the sample holder 1 and the samples in it or on it within the oven zone 21 in relation to the cold/warm boundary 6; in given cases an adjustment monitoring instrument, which in given cases may be a measuring instrument 10 or 11 is connected along the direction $x$ to the temperature sensors 3, whereby the temperature distribution along the direction $x$ may be measured in a more accurate or more detailed manner within the sample holding device. The individual temperature sensors 3 are connected to the change-over contact $3_k$ of a switch $K_2$ in any desired order and thus to the measuring instruments 10, 11. The pushing/pulling rod 5 is actuated by a displacing device 4. As may be seen in Figure 1, the sample holding mechanism can be displaced in a direction designated $x$ and perpendicular to the cold-warm boundary 6 with the aid of the actuating mechanism 4 and the pushing/pulling rod 5. The temperature sensors 3 connected to the sample holder in operation measure the temperature distribution along the axis $x$, along the sample or samples of the sample holder 1 and these temperature sensors are displaceable together with the sample holder 1. By means of the temperature regulator 7 it can be provided that the warmer point along the axis $\underline{x}$ should have a temperature which is always the same independently of the position of the sample holder for as long as the temperature sensor remains connected with the oven zone 21, i.e. remains on the side of the cold/warm zone boundary 6 which is adjacent the heating elements 8. The temperature sensors 3 are effective to connect the sample holder 1 either directly to the regulators 7 or 9 or via the change-over contact $3_k$ of the switch $K_2$ to various measuring instruments, for instance to the measuring instruments 10 and/or 11. By means of the controller 9 and with the aid of the actuating device 4 and the pushing/pulling rod 5 the temperature sensor 3 disposed along the cold end of the axis $\underline{x}$ a feedback system may be realised which automatically adjusts the sample holder 1 carrying the samples into position such that the temperature sensor at the colder end should sense a temperature corresponding to a preset temperature $T_{min.ref}$.

Within the possible physical and energetic limits the temperature sensors and the controllers or regulators 7 and 9 can assure an actual temperature distribution for the sample holder and the samples corresponding to the temperature distribution T-f(x), along the direction x by suitably setting the upper/lower limits $T_{min}$ and $T_{max}$.

It may for example be achieved that the temperature distribution along the axis x should be constant or vary with time and that the temperature difference $T_{min}$ and $T_{max}$ should be extremely small approximating to zero or extremely large, in fact as much as more than a thousand degrees C. A varying temperature distribution may for instance be achieved by a programmed control applied to the inputs $T_{max.ref}$ and $T_{min.ref}$ of the controllers 7 and 9. This is a very favourable possibility to model physically the possible adjustments of the most varied heat treatment characteristics by a suitable selection of programmes. $U_{vez}$ is the controlling voltage for member 4.

Example 2

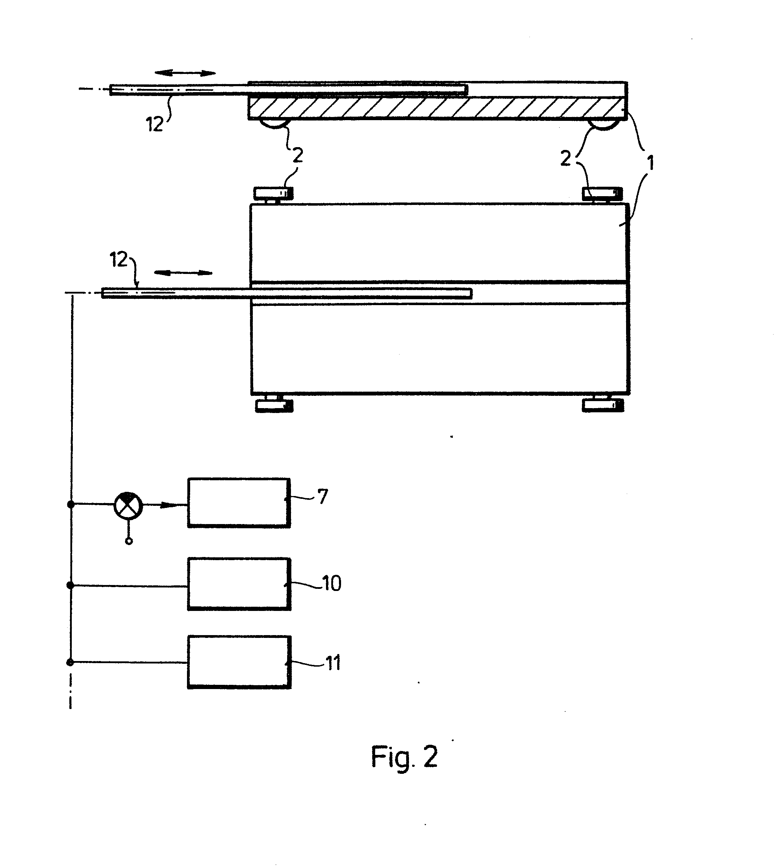

Figure 2 illustrates the sample holder 1 of the adapter illustrated in Figure 1 but in another preferred embodiment. In this case the sensing point of the temperature sensor 12 is displaceable along the x axis independently of the position of the sample holder 1 in the oven zone 21 or of the relative position of the sensor from the cold/hot boundary 6. The elements 12 and 1 are mutually independently displaceable but naturally the possibility also arises of interposing some forced connection, such as a gear connection, with the aid of which a predetermined amount of displacement of one component causes a predetermined amount of displacement of the other component. One or more displaceable temperature sensors 12 may be built into the sample holder of the adapter 1 or directly next to the samples in the sample holder 1 which latter have a predetermined position relative to the sample holder or which are disposed in a predetermined configuration. The other possibility arises of suitably selecting the displacement programme of the displaceable temperature sensors whereby the temperature distribution along the axis x or at individual points along the axis x the temperature can be measured with the desired accuracy.

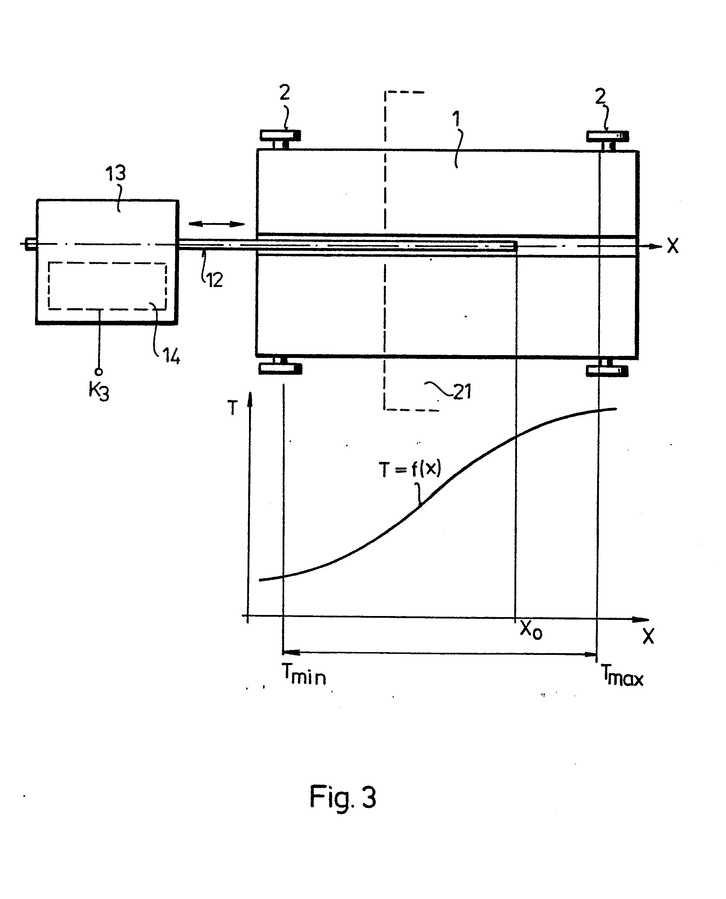

According to experiments performed the movement route of the displaceable temperature sensor may in principle be formed in the sample holder 1 in which case, however, it may happen that the construction of the sample holder becomes difficult and the very advantage of the construction of the adapter does not come to the fore, namely that the conventional heat treatment retorts or chambers can also be used. In other respects from the point of view of accuracy of temperature measurement it is more favourable when the movement path of the displaceable temperature sensor 12 is determined by means of a groove extending in the x direction and formed in the sample holder 1 or by some other guiding means along the sample holder or between the samples in the sample holder. From the point of view of manufacture this is more advantageous also because in this way the various elements of the apparatus can be built in a modular manner as independent units without depending on the method of assembly or mounting, that is to say the displaceable temperature sensor 12, the element 13 (Fig. 3) for displacing the temperature sensor 12 relative to the sample holder 1, and sensor 14 for sensing the position of the temperature sensing point in the sample holder 1 and the regulators or controllers 7, 12 and 11 connected thereto and illustrated in the drawings or other devices. The element 13 and the sensor 14 may be seen in Figure 3 in the Example with a given sample holder 1 and a given displaceable temperature sensor 12.

Example 3

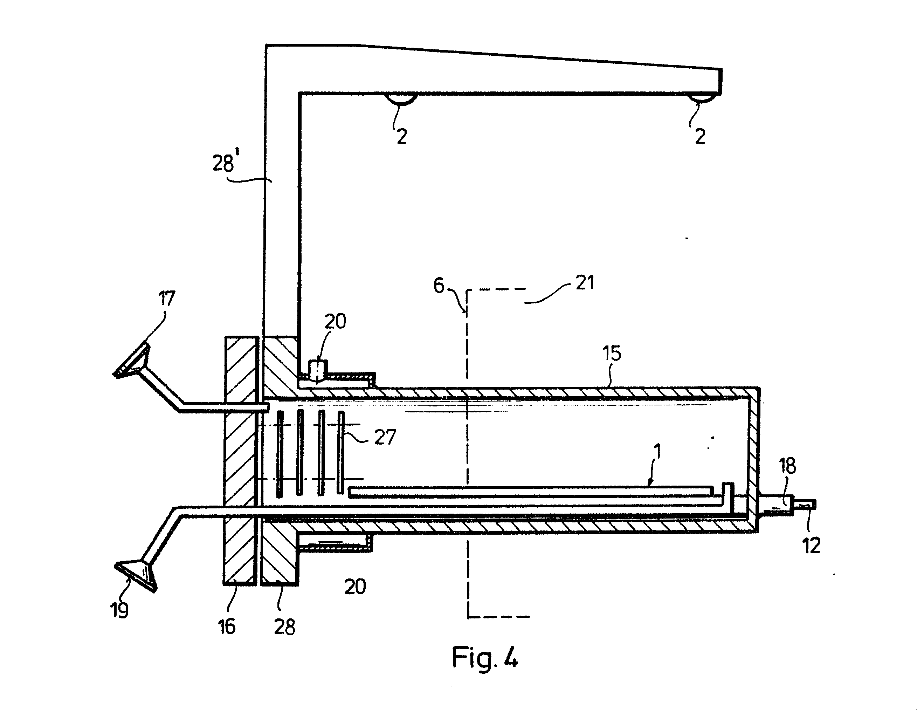

Figure 4 illustrates a further possible preferred embodiment. In this case the samples disposed on the sample holder 1 in the interior of the retort or reaction chamber 15 can be isolated from the external atmosphere and the displaceable temperature sensor 12 in the retort 15 is disposed within a gas-tight cover 18 in such a manner as to be externally settable to any desired position; however, naturally, the possibility is also afforded that the construction should contain the fixed, non-displaceable temperature sensors 3 shown in Figure 1 for determining the temperature along the axis $x$. There is furthermore the possibility of disposing the samples directly at the bottom part of the wall of the retort 15, that is the sample holder 1 may directly consist of the retort or reaction chamber 15. The fixed position temperature sensors 3 or the displaceable temperature sensor 12 may directly be built into the sample holder 1 but furthermore the possibility also arises of using them as an adaptor or as a partial unit or sub-assembly in the mechanism. At the rim or edge region 28 of the retort 15, water-coolers 20 and heat reflectors 27 may be disposed and in the closure rim 16 couplings 17 and 19 are provided for vacuum and for introducing a gas. To displace the construction in the retort along the axis $x$ there is provided a guiding and suspending device 28' which is provided with wheels 2 or sliding elements to enable the suspension 28' to roll or be displaced. On the basis of experiments performed many known commercially available devices designed for normal, i.e. non-gradient type, heat treatment can be readily adapted along the lines indicated in the present invention. Thus for instance the West German firm Heraeus markets a heat treatment of a Type KR 260 E which could be used for the heat treatment zone 21 and a retort or reaction chamber also manufactured by Heraeus of the type 'Schutzgas-Retorten' may be used for forming a sample holder 1 or the displaceable heat sensor or temperature sensor 12. All that is required is that the original pipe for introducing the thermal element should be exchanged for a longer element which then extends right through the full length of the retort to place the samples and the sample holder 1 may be constituted by the interior of the retort directly in which the temperature distribution is measured by the replaced cover of the thermal element, in the cover 18, by means of the externally actuatable displaceable temperature sensor 12; advantageously this performs measurements automatically in the various positions along the axis $\underline{x}$.

Furthermore, the original retort or reaction chamber has to be fixed on the guiding and suspending device 28' the wheels 2 of which can move on rails mounted above the oven of the type KR 260 E to assure displaceability along the axis $\underline{x}$.

The temperature controller 7 interrupts the heating of the oven when the desired hot point temperature has been attained and enables the original temperature controller to provide the heating when a temperature falls below the prescribed value of the hot point.

The cold point temperature may be attained e.g. with the aid of the actuating device 4 which determines the position along the axis $\underline{x}$ of the suspension and guiding device 28'. In given cases this positioning can be automated by means of the controller 9 also.

Numerous other variants of existing commercial heat treatment devices can be converted on the same basis or scheme within the parameters of the mechanism of the apparatus according to the invention.

Example 4

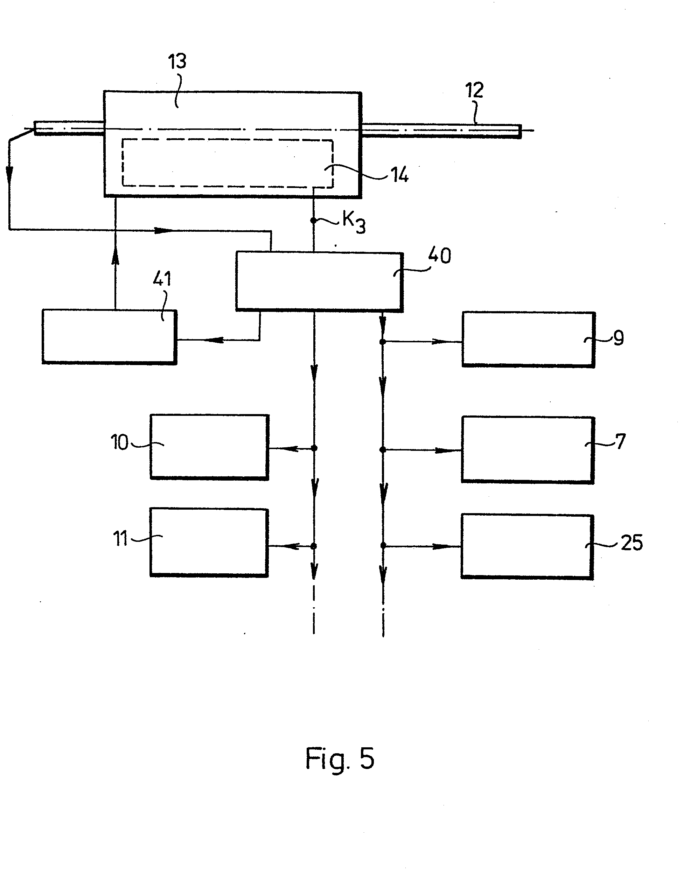

Figure 5 illustrates a further preferred embodiment of a temperature controlling system consisting of a displaceable temperature sensor 12, an operating element 13 and a sensor 14. In this case the displaceable temperature sensor 12 and the position sensor 14 form a single constructional unit. The controlling or operating element 13 controls the displaceable temperature sensor 12 and sets it in the desired positions. In given cases the operating element can be controlled by a (micro)-processor 40 which passes the electrical signals from the displaceable temperature sensor 12 proportional to the temperature to the controllers 9, 7, 25 etc. or to the measuring instruments 10, 11 in accordance with the desired programme corresponding to the individual set positions of the displaceable temperature sensor 12.

According to our experience in principle a single processor can perform all the positional adjustment and signalling operations and it is extremely favourable in the adaptation that the adjustment positions of the temperature sensor 12 and the times of the measurement in the individual positions, at all times in accordance with the actual heat treatment apparatus accommodating the adapter and the constructional form of the adapter itself. This is also very favourable because in this way

the (micro)-processor 40 can be manufactured as a separate module and can be dimensioned as an independent constructional unit without building it together with the rest. This also assures a favourable exchangeability both for the (micro)-processor 40 and for the other units that can be connected to it such as units 41, 10, 11, 9, 7 and 25 which further simplify the adaptation of hitherto known apparatuses intended for the purposes of the invention.

Example 5

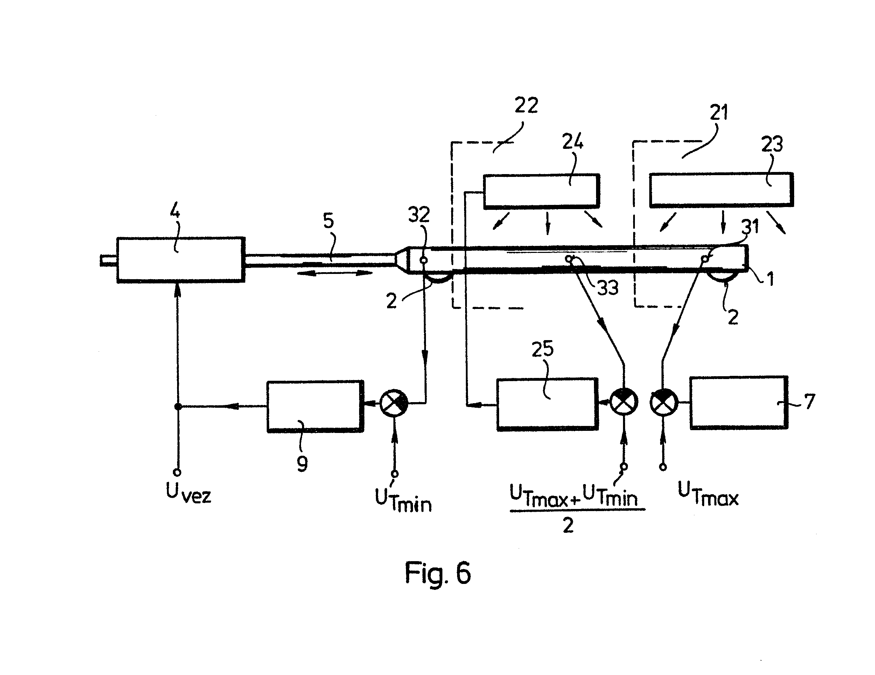

Figure 6 illustrates a variant of the adapter according to the invention in which there are three different modes of regulation.

A sensor 13 at the centre of the sample holder 1 is fed back from a given point to a further controller 25 which, with the aid of heating elements 24 controls the temperature corresponding to a reference voltage

$$\frac{U_{Tmax} + U_{Tmin}}{2}$$ from the sensing point of the sensor 33,

until regulation is made physically possible by the condition of the zones 22 and 21 or by the sensors 32, 31 and 33. As before, the controller 9 controls the actuating device 4 in accordance with the temperature signalled by the sensor 32.

The illustrated construction may advantageously be used for linearising the temperature distribution of the sample holder along the direction $x$ in the case of longer sample holders one of larger surface area, because here there are significant heat losses due to radiation and in place of the linear temperature distribution one would obtain the temperature distribution characteristic T-f(x) shown in Figure 3 if the heating of the zone 22 were not controlled in accordance with the above.

Example 6

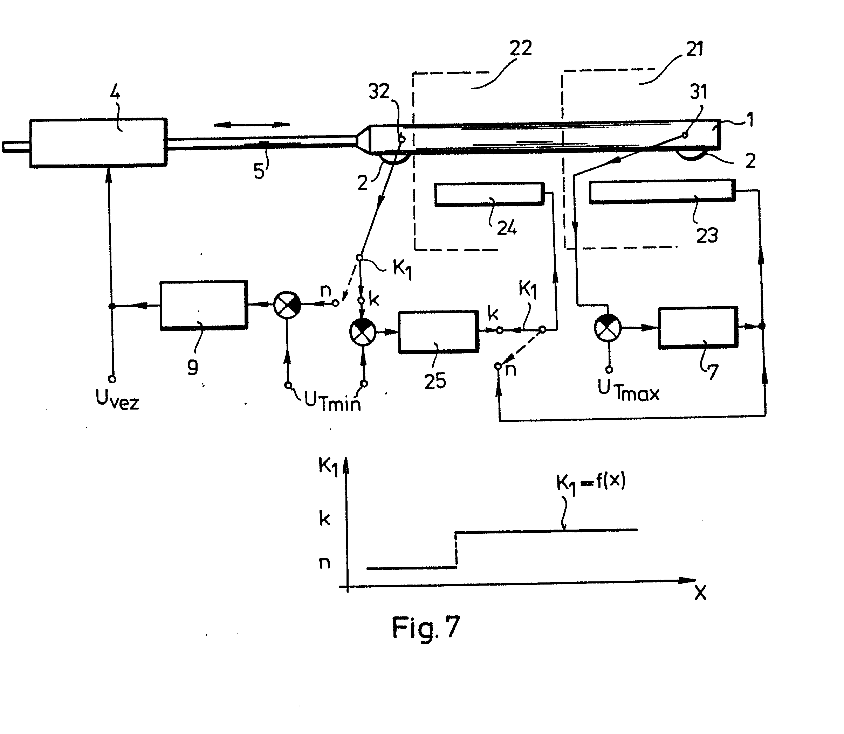

Figure 7 illustrates an adapter according to the invention in a variant particularly suitable for heat treatment ovens having two zones.

In this case the position of the sample holder 1 in accordance with the function $K_1$ - f(x) makes it possible to co-ordinate the heat distribution or temperature distribution along the axis x either with the aid of the controller 25 or the controller 9 at the sensing point of the sensor 32 with a given reference voltage $U_{Tmin}$. The sensing point of the temperature sensor 32 is either within the heat zone 22 and then the temperature distribution can be set by means of the regulators 7 and 25 and with the heating elements 23 and 24 connected thereto for forming the temperatures in the zones 21 and 22; or the sensing point of the sensor 32 is outside a boundary of the heating zone 22 and then ( Figure 7 shows the instant before the change-over) the heating elements 23 and 22 of the heat zones 22 and 21 respectively are connected together to the regulator 7 and the controller 9 is connected to the heat sensor 32 so that in essence the embodiment of Figure 1 arises. According to experiments this connection of the adapter and the heat treatment oven in one mechanism enables an accurate setting of large or small scale temperature gradients. Namely a small gradient can be produced by a two-zone heating while a large gradient can be readily achieved with a single-zone heating.

The excellent characteristics of the mechanism according to the invention are manifested in several areas of utilisation but particularly in the optimisation and testing methods according to Hungarian Patent No. 163,839 when used in metal industries, ceramic industries, semi-conductor industries, telecommunications, chemicals, pharmaceutical and agricultural industries, the characteristics of which are such that they may be used not only in metallurgy but also in all technologies where there is the possibility of realising actual effects which can be expressed in one or several directions, or where the properties of the materials can be examined as a function of gradients in one or more directions. A chief advantage of the mechanism according to the invention that by means exchangeable elements it can be adapted to virtually any heat treatment apparatus, in this way the area of applicability of known heat treatment devices can be extended for determining the interrelations of the various parameters such as temperature duration, repetition frequency etc. or to investigate such interrelations or for optimising them.

A further advantage is that the number of tests required for determining these relations and thus the energy requirements of the heat treatments are reduced by an order of magnitude. A further advantage is that the utilisation of per se known computing and measuring techniques can be used to result in an inexpensive and versatile laboratory by rendering existing apparatuses intended for only a single purpose to become usable for other things. Since the components of the apparatus according to the invention are not only exchangeable but also modular, one is enabled to use the construction variant which best matches the technological requirements.

Claims

1.  Temperature distribution-controlling sample-
holding adapter, particularly for realising conditions for
gradient heat treatment in heat treatment devices made for
uniform spatial temperature distribution, wherein a displaceable sample holder and heat distribution measuring
sensor(s) are disposed in the heat treatment zone(s) of the
device and the temperature of the zone(s) can be regulated
by means of controller(s), characterised in that the sample
holder (1) is provided with a pushing/pulling element (5)
connected to an actuating device (4), furthermore the
sample holder (1) contains temperature sensor(s) (3, 31, 32,
33 and 12) and/or temperature sensor(s) is or are located
amongst the samples disposed on the sample holder; from
among the temperature sensors the cold-side sensor(s)
(32, 12) is or are connected to a controller or regulator
(9) via the intermediation of the actuating device (4)
and the pushing/pulling element (5), while the hot side
temperature sensor(s) (31, 12) is or are connected to a
controller or regulator (7) which controls the intensity
of heating of at least one heating zone (21, 22), and in
given cases the signal taken from one or more sensing point
(33, 12) is connected to a controller (25) that controls
the heating of the further heating zone (22), and in given
cases electrical contacts $(K_1, K_n)$ are connected in the
circuits in which the controllers (7, 9, 25) or sensors
(31, 32, 33 and 12) for switching-over or switching-on the
controllers (7, 9, 25) in dependence on time and on the
position of the sample holder (1); furthermore, in given cases, to measure the temperature distribution along the samples disposed in the sample holder (1), there is provided a displaceable temperature sensor (12) the output of which is connected to a junction or terminal (42) for measuring instruments (10, 11) and/or for controllers (7, 9, 25) which element (10, 11, 7, 9, 25) may in given cases be connected via a programmable processor or microprocessor (40) with the position-dependent control signal of the displaceable temperature sensor (12).

2. An adapter according to claim 1, characterised in that for accommodating the samples it has a reaction chamber or retort (15) which can be subjected to vacuum or to predetermined gas atmosphere to which are connected wheels (2) for guiding the movement of the retort along the gradient or indirectly via suitable suspension means (28') and in which retort (15) a gas-tightly closing pipe (18) accommodate the displaceable temperature sensor so as to form an externally actuatable adapter.

3. An adapter according to claim 1 or claim 2, wherein to adjust or set the displacement of the sample holder (1) there is provided a control input ($U_{vez}$) which can be actuated when the controller (9) is switched off or is inoperative.

Fig.1

Fig. 2

Fig. 3

Fig. 4

Fig. 5

Fig. 6

0094458

Fig. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | G 05 D 23/19 |
| X | NL-A-6 601 608 (PHILIPS) <br> * Page 2, lines 8-29; page 3, line 26 - page 6, line 36; page 5, lines 8-13, 26-29 * | 1,3 | C 21 D 11/00 <br> H 05 B 1/02 |
| | --- | | |
| X | VERRES ET REFRACTAIRES, vol. 18, no. 1, January/February 1964, pages 41,42, Paris, FR. <br> Z. HABERLE et al.: "Détermination de la vitesse de cristallisation, dans un four électrique à gradient, à l'aide d'un régulateur électronique de température" * Whole document * | 1 | |
| | --- | | |
| A | FR-A-1 241 907 (INSTITUT DR. ING. R. STRAUMANN A.G.) <br> * Page 1, right-hand column, lines 3-38; page 2, left-hand column, line 30 - right-hand column, line 21; figures 1,2 * | 2 | TECHNICAL FIELDS SEARCHED (Int. Cl. 3) |
| | ----- | | F 27 B <br> H 05 B <br> C 21 D <br> G 05 D |

The present search report has been drawn up for all claims

| Place of search <br> THE HAGUE | Date of completion of the search <br> 04-02-1983 | Examiner <br> HELOT H.V. |
|---|---|---|